# EUROPÄISCHE PATENTANMELDUNG

(11) **EP 4 438 921 A1**
(43) Veröffentlichungstag der Anmeldung: **02.10.2024**
(21) Anmeldenummer: 23164531.8
(22) Anmeldetag: 28.03.2023
(51) Int. Cl.: F16H 57/021, F16H 57/08, F03D 15/00, F16H 1/46, F16H 1/28

(54) **PLANETENGETRIEBE MIT IN PLANETENTRÄGER GELAGERTEM SONNENRAD**

(71) Anmelder: Flender GmbH, 46395 Bocholt (DE)
(72) Erfinder: Kleine-Brockhoff, Ralf, 46395 Bocholt (DE); Lensing, Volker, 46395 Bocholt (DE); Vennemann, Michael, 46395 Bocholt (DE)
(74) Vertreter: Michalski Hüttermann & Partner Patentanwälte mbB

(57) **Zusammenfassung**

Planetengetriebe 10 für eine über einen Rotor 106 angetriebene Windkraftanlage 100 mit zumindest einer in einem Getriebegehäuse 12 um eine Drehachse A_{D} umlaufenden Planetenstufe 14, wobei die zumindest eine Planetenstufe 14 einen Planetenträger 16 und ein Hohlrad 20 aufweist und der Planetenträger 16 zumindest mittelbar mit dem Rotor 72 antriebsverbunden ist und wobei der Planetenträger 16 mehrere mit dem Planetenträger 16 umlaufend und wechselseitig mit dem Hohlrad 20 und einem Sonnenrad 22 in einem bevorzugt schrägverzahnten Verzahnungseingriff stehende Planetenräder 18 aufweist. Das Sonnenrad 22 ist gegenüber dem Planetenträger 16 der zumindest einen Planetenstufe 14 drehbar um die Drehachse A_{D} und axial verschiebefest gelagert. Es wird eine drehend-in-drehend Lagerung bereitgestellt und die durch die Schrägverzahnung erzeugte Axialkraft kann über den Planetenträger 16 unmittelbar aufgenommen werden.

## Beschreibung

Die Erfindung betrifft ein Planetengetriebe für eine über einen Rotor angetriebene Windkraftanlage mit zumindest einer in einem Getriebegehäuse um eine Drehachse A_{D} umlaufenden Planetenstufe, wobei die zumindest eine Planetenstufe einen Planetenträger und ein Hohlrad aufweist und der Planetenträger zumindest mittelbar mit dem Rotor antriebsverbunden ist und wobei der Planetenträger mehrere mit dem Planetenträger umlaufend und wechselseitig mit dem Hohlrad und einem Sonnenrad in einem Verzahnungseingriff stehende Planetenräder aufweist.

Der Aufbau des Antriebsstrangs einer Windkraftanlage ist derart, dass der Rotor eine in einer Hauptlagereinheit gelagerte Hauptwelle antreibt und die Hauptwelle mit einem in der Regel als Planetengetriebe ausgeführten Getriebe verbunden ist und über das Getriebe eine Generatoreinheit antreibt. Das Planetengetriebe umfasst zumindest eine Planetenstufe, wobei die Hauptwelle in der Regel den Planetenträger der zumindest einen Planetenstufe antreibt und über das Sonnenrad der Planetenstufe in Richtung Generator abgetrieben wird. Die Verzahnung der Planetenstufen ist schrägverzahnt. Im Hinblick auf die Lagerung des Antriebsstrangs ist zu unterscheiden zwischen der Lagerung der Hauptwelle über die Hauptlagereinheit und der lagermäßigen Abstützung der in der zumindest einen Planetenstufe wirkenden Axialkraft, die infolge der Schrägverzahnung der Verzahnungskomponenten oder durch die Hangabtriebskraft des geneigten Getriebes entsteht. Die jeweilige Lagerung kann je nach Anwendungsfall unterschiedlich ausgeführt sein.

Vorliegend wird für die Hauptlagereinheit der Anwendungsfall betrachtet, bei dem die Hauptwelle starr an den Planetenträger der zumindest einen Planetenstufe angebunden ist und der Planetenträger keine eigene Lagerung gegenüber dem Getriebegehäuse erfährt. Stattdessen übernimmt die Hauptwelle über die Hauptlagereinheit die mittige und winkelgenaue Positionierung des ersten Planetenträgers innerhalb des Getriebegehäuses. Die infolge der Schrägverzahnung oder der Hangabtriebskraft abzustützende Axialkraft ist in der normalen Drehrichtung des Rotors, d.h. im sogenannten Nennbetrieb, in Richtung des Generators gerichtet und dreht ihre Richtung nur im seltenen Fall der reversierten Drehung des Rotors um. Betrachtet man den Planetenträger einer Planetenstufe, so wirken auf den Planetenträger keine freien Kräfte, d.h. die Summe der auf den Planetenträger wirkenden Kräfte ist Null. Dies bedeutet allerdings, dass die infolge der Schrägverzahnung oder der Hangabtriebskraft abzustützende Axialkraft auf das Sonnenrad der Planetenstufe wirkt und das Sonnenrad geeignet axial abgestützt werden muss. Diese Axialkraft wird herkömmlich über radial in das Getriebegehäuse hineinragende Abstützflansche und entsprechende Lager abgestützt. Insbesondere wenn eine zweite, nachfolgende Planetenstufe vorgesehen ist, ist das Sonnenrad der ersten Planetenstufe mit dem Planetenträger der zweiten Planetenstufe antriebsmäßig verbunden und die Axialkraft wird im Nennbetrieb über einen hinter der zweiten Planetenstufe angeordneten Abstützflansch und im Reversierbetrieb über einem zwischen den beiden Planetenstufen angeordneten Abstützflansch abgestützt, d.h. in das Getriebegehäuse abgeleitet. Jeder Abstützflansch muss zur Aufnahme der Axialkraft dimensioniert werden und trägt folglich zur Gewichtsmasse des Getriebegehäuses und dessen axialen Bauraum bei. Außerdem wird die Axialkraft über sich drehende Bauteile der Planetenstufen geführt, so dass auch diese entsprechend dimensioniert werden müssen und dies sowohl Gewichtsmasse als auch Bauraum beansprucht. Es besteht folglich ein ständiges Bedürfnis den Bauraum und die Gewichtsmasse von Abstützflanschen zu reduzieren oder auf diese sogar vollständig zu verzichten.

Es ist die Aufgabe der Erfindung Maßnahmen aufzuzeigen, die die Axialkraft in ihrer und ihrem Verlauf dahingehend beeinflussen, dass Abstützflansche gewichts- und bauraumreduzierend ausgelegt werden können.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Planetengetriebe für eine über einen Rotor angetriebene Windkraftanlage mit zumindest einer in einem Getriebegehäuse um eine Drehachse A_{D} umlaufenden Planetenstufe, wobei die zumindest eine Planetenstufe einen Planetenträger und ein Hohlrad aufweist und der Planetenträger zumindest mittelbar mit dem Rotor antriebsverbunden ist und wobei der Planetenträger mehrere mit dem Planetenträger umlaufend und wechselseitig mit dem Hohlrad und einem Sonnenrad in einem Verzahnungseingriff stehende Planetenräder aufweist, wobei das Sonnenrad gegenüber dem Planetenträger der zumindest einen Planetenstufe drehbar um die Drehachse A_{D} und axial tragend gelagert ist.

Das Planetengetriebe kann eine oder mehrere Planetenstufen umfassen. Die jeweils letzte Planetenstufe kann mittelbar oder unmittelbar einen Generator antreiben. Bei einem mittelbaren Antrieb kann eine zwischengeschaltete Stirnradstufe vorgesehen sein. Der Planetenträger kann korbartig aufgeführt sein. Die Drehachse A_{D}, um die die zumindest eine Planetenstufe während eines Betriebes umläuft, legt vorliegend die Axialrichtung fest.

Die Planetenräder sind über Planetenachsen an dem Planetenträger gehalten. Die Planetenachsen laufen parallel und versetzt zu der Drehachse A_{D}. Die Planetenträger sind in eine radiale Richtung nach innen und eine radiale Richtung nach außen von dem Planetenträger bzw. den Seitenwangen freigestellt und stehen über eine jeweilige Schrägverzahnung in einem Eingriff mit einem Hohlrad und einem Sonnenrad bzw. einer Sonnenradwelle.

Das Sonnenrad kann unmittelbar gegenüber bzw. auf dem Planetenträger gelagert sein. Der Planetenträger kann hierfür einen geeigneten Bereich ausbilden, der sich für die Anordnung einer entsprechenden Lagerung eignet. Alternativ kann das Sonnenrad auch mittelbar auf dem Planetenträger gelagert sein, beispielsweise indem das Sonnenrad unmittelbar auf einem abtreibenden Element sitzt und das abtreibende Elemente seinerseits unmittelbar auf dem Planetenträger gelagert ist. Ein abtreibendes Element kann beispielsweise eine Abtriebswelle sein, die das zu übertragende Drehmoment in eine weitere Getriebestufe leitet. Sollte die weitere Getriebestufe eine zweite Planetenstufen sein, so kann die Abtriebswelle als Planetenträger ausgeführt sein.

Indem das Sonnenrad axial tragend gegenüber bzw. auf dem Planetenträger gelagert ist, kann die in das Sonnenrad über die Schrägverzahnung eingebrachte Axialkraft oder durch die Neigung induzierte Hangabtriebskraft - im weiteren Verlauf wird vereinfachend immer nur die Axialkraft benannt - in den Planetenträger der zumindest einen Planetenstufe abgeleitet werden, so dass die Axialkraft nicht in nachgelagerten Teilen des Planetengetriebes wirksam ist. Innerhalb der Planetenstufe stützt sich das Sonnenrad axial gegenüber dem Planetenträger ab. Hiermit ist gemeint, dass die Axialkraft, die auf das Sonnenrad einer ersten Planetenstufe wirkt, nicht durch eine eventuell vorgesehene sich anschließende Planetenstufe oder einem sich anschließenden Stirnradgetriebe geleitet und entsprechend dort abgestützt werden soll. Das beschriebene Lagerungskonzept, nämlich Sonne auf Planetenträger innerhalb einer Planetenstufe, kann als eine drehend-in-drehend-Lagerung beschrieben werden. Eine solche ist u.a. vorteilhaft für das Verschleißverhalten, da sich sowohl äußere als auch das innere Lagerelement drehen und die Axialkraft nicht über einen feststehenden Bereich abgeleitet wird, wie dies bei der Lagerung über Abstützflansche des Getriebegehäuses der Fall ist. Der Drehzahlunterschied in nachgelagerten Teilen des Planetengetriebes ist ebenfalls um den Faktor der ersten Planetenstufe geringer.

Indem die Axialkraft nicht über einen Abstützflansch des Getriebegehäuses abgeleitet werden muss, können bestehende Abstützflansche entweder kleiner ausgeführt werden, da sie nicht mehr mit erhöhter Axialsteifigkeit ausgeführt werden müssen, oder sogar vollständig weggelassen werden. Hierdurch ist es möglich im Getriebegehäuse Bauraum und Gewichtsmasse einzusparen. Die während eines Nennbetriebes oder einer Reversierbetriebes von dem Sonnenrad in den Planetenträger eingeleitete Axialkraft wird über die Hauptwelle in der Hauptlagereinheit abgestützt.

In einer bevorzugten Ausgestaltung des Planetengetriebes ist eine Lagerung vorgesehen, über die das Sonnenrad gegenüber dem Planetenträger drehbar gelagert und axial verschiebefest gehalten ist. Die Lagerung kann als Wälzlagerung, Gleitlagerung oder über Anlaufscheiben realisiert sein. Im Gegensatz zu einem Lager bei der herkömmlichen Anordnung in einem gehäusefesten Abstützflansch, hat das drehend-in-drehend angeordnete Lager eine geringe Umfangslast und eine geringe Drehzahl.

In einer bevorzugten Ausgestaltung ist die Lagerung innerhalb des Sonnenrades angeordnet. Hierdurch ist es insbesondere möglich, den Durchmesser der Lagerstelle zwischen Sonnenrad und Planetenträger gegenüber einer Lagerung in einem Abstützflansch zu verkleinern.

In einer weiterhin bevorzugten Ausgestaltung ist vorgesehen, dass es sich um einen schrägverzahnten Verzahnungseingriff handelt, wobei die Verzahnung eine rechtssteigende oder linkssteigende Schrägungsrichtung aufweisen kann. Hiermit ist die im Nennbetrieb durch die Schrägverzahnung oder die Hangabtriebskraft wirksame Axialkraft in Richtung des Generators gerichtet, die Richtung der Schrägverzahnung umgedreht und im Nennbetrieb ist die Richtung der Axialkraft zum Rotor hin gerichtet. Hierdurch sind im Nennbetrieb die durch die Schrägverzahnung wirksame Axialkraft den durch den Rotor in die Hauptwelle eingebrachten Axialkraft entgegengesetzt und reduzieren die in Summe in der Hauptwelle wirksame Axialkraft. Die durch die Schrägverzahnung erzeugte und durch das Umdrehen der Schrägungsrichtung zum Rotor gerichtete Axialkraft entlastet somit die Hauptlagereinheit.

In einer bevorzugten Ausgestaltung des Planetenträgers ist das Sonnenrad zumindest mittelbar auf einem axial gerichteten Lagerflansch des Planetenträgers gelagert. Durch diesen Lagerflansch und die Anbindung an die restliche Struktur des Planetenträgers kann dieser deutlich torsionssteifer ausgeführt werden. In konkreter Ausgestaltung kann vorgesehen sein, dass der Lagerflansch einstückig mit dem Planetenträger ausgeführt ist oder als ringförmiges Bauteil mit dem Planetenträger verbunden eine funktionelle Einheit bildet.

In einer besonders bevorzugten Ausgestaltung des Planetengetriebes ist zumindest eine zweite Planetenstufe mit einem Planetenträger vorgesehen, wobei der Planetenträger der zweiten Planetenstufe über das Lager gegenüber dem Planetenträger der ersten Planetenstufe drehbar gelagert ist. Bei dieser Ausgestaltung ergeben sich weitere strukturelle und bauliche Vorteile infolge einer drehend-in-drehend Lagerung des Sonnenrades gegenüber dem Planetenträger in der ersten Planetenstufe. Herkömmlich ist die auf das Sonnenrad wirkende Axialkraft zum Generator hin gerichtet und wird vom Sonnenrad über den Planetenträger der zweiten Planetenstufe geführt und hinter der zweiten Planetenstufe über eine Lagerung in einen Abstützflansch eingeleitet. Indem nun allerdings in der ersten Planetenstufe eine drehend-in-drehend Lagerung des Sonnenrades gegenüber dem Planetenträger vorgesehen ist, wird die Axialkraft nicht mehr über die zweite Planetenstufe geleitet, so dass der Abstützflansch hinter der zweiten Planetenstufe entfallen oder verkleinert und damit Bauraum und Gewichtsmasse eingespart werden kann. Zudem kann aber durch die drehend-in-drehend Lagerung auch auf den herkömmlich zwischen der ersten und der zweiten Planetenstufe angeordneten Abstützflansch verzichtet werden. Dieser Abstützflansch ist herkömmlich dafür vorgesehen, die in einem Reversierbetrieb des Rotors in die entgegengesetzte Richtung entstehende Axialkraft abzustützen. Die Axialkraft im Reversierbetrieb wird nunmehr ebenfalls über den Planetenträger der ersten Planetenstufe in die Hauptlagereinheit eingeleitet und von dieser abgestützt. Von Vorteil ist hierbei auch, dass die Verzahnungselemente, die durch die geänderte Lagerung von der Axialkraft freigestellt wurden, sich im Betrieb besser ausrichten können und insgesamt auch schmaler gehalten werden können. Zusammenfassend ist als Vorteil zu nennen, dass durch diese bevorzugte Ausgestaltung das Planetengetriebe deutlich kürzer bauen kann, da Bauraum zwischen den beiden Planetenstufen und hinter der zweiten Planetenstufe eingespart werden kann. Weiterhin ist es möglich den Planetenträger des zweiten Planetenträgers einwangig auszuführen, da er nicht mehr die Belastung durch die Axialkraft aushalten muss.

In einer konkret ausgeführten Ausgestaltung ist der Planetenträger der zweiten Planetenstufe drehfest und axial tragend mit dem Sonnenrad der ersten Planetenstufe verbunden. Ausgehend hiervon ergibt sich als erste Möglichkeit der konstruktiven Ausführung, dass das Lager der drehend-in-drehend Lagerung zwischen dem ersten Planetenträger und dem ersten Sonnenrad angeordnet ist und als zweite Möglichkeit der konstruktiven Ausführung, dass das Lager der drehend-in-drehend Lagerung zwischen dem ersten Planetenträger und dem zweiten Planetenträger angeordnet ist. Bei der zweiten konstruktiven Ausführungsmöglichkeit kann insbesondere vorgesehen sein, dass die Lagerung in einem durch eine in axialer Richtung überlappende Anordnung des Lagerflansches des ersten Planetenträgers mit einer Nabe des zweiten Planetenträgers gebildeten Axialbereich angeordnet ist.

In einer bevorzugten Ausgestaltung kann vorgesehen sein, dass das Sonnenrad der ersten Planetenstufe über eine Verzahnungspaarung außenumfänglich auf der Nabe des zweiten Planetenträgers drehfest gehalten ist. Hierdurch ist es in vorteilhafter Weise möglich, die erste Planetenstufe und die zweite Planetenstufe in axialer Richtung baulich enger zusammenzurücken. Hierbei kann das Sonnenrad der ersten Planetenstufe gegenüber dem zweiten Planetenträger in axialer Richtung verbunden sein.

In einer weiteren möglichen Ausgestaltung des Planetengetriebes kann vorgesehen sein, dass eine zweite Wälzlagerung vorgesehen ist, über die der zweite Planetenträger auf der von der ersten Planetenstufe abgewandten Seite gegenüber dem Getriebegehäuse drehbar gelagert ist.

Diese Ausgestaltung ist insbesondere dann zweckmäßig, wenn das Planetengetriebe eine dritte Planetenstufe umfasst und die Axialkraft, die bei einem Reversierbetrieb des Rotors in der dritten Planetenstufe entsteht, über einen Abstützflansch zwischen der zweiten und dritten Planetenstufe abgestützt werden muss. In diesem Fall kann dieser Abstützflansch für eine Lagerung des Planetenträgers der zweiten Planetenstufe genutzt, so dass zusammen mit dem Wälzlager zwischen dem Sonnenrad und dem Planetenträger der ersten Planetenstufe eine Vier-Punkt-Lagerung entsteht.

Die Aufgabe wird zudem gelöst durch einen Antriebsstrang für eine Windkraftanlage zur drehmomentübertragenden Verbindung eines Rotors mit einem Generator, umfassend eine Hauptlagereinheit mit einem Lagergehäuse und einer Hauptwelle und ein über die Hauptwelle angetriebenes Getriebe, wobei das Getriebe den Generator zumindest mittelbar antreibt und das Getriebe als Planetengetriebe nach einer der beschriebenen Ausführungsformen ausgebildet ist.

Gleichermaßen wird die Aufgabenstellung gelöst durch eine Windkraftanlage, mit einem Rotorflansch mit einem Rotor und einem Generator, wobei ein an einem Maschinenträger gehaltener und den Rotorflansch mit dem Generator verbindender Antriebsstrang vorgesehen ist und der Antriebsstrang wie zuvor beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage,
Fig. 2: ein als Planetengetriebe ausgeführtes Getriebe für eine Windkraftanlage,
Fig. 3: einen Ausschnitt eines Planetengetriebes in möglicher Ausführung mit drehend-in-drehend Lagerung;
Fig. 4: einen Ausschnitt eines Planetengetriebes in möglicher Ausführung mit drehend-in-drehend Lagerung;
Fig. 5: einen Ausschnitt eines Planetengetriebes in möglicher Ausführung mit drehend-in-drehend Lagerung und
Fig. 6a) - 6c): über die Schrägverzahnung der ersten Planetenstufe erzeugte Axialkräfte.

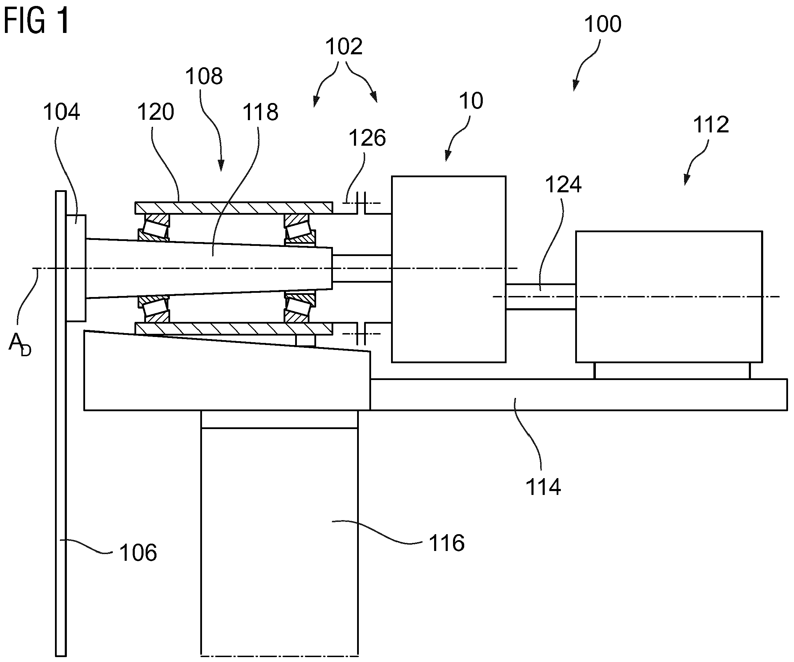

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Getriebe 10 und einen Generator 112 umfasst. Über einen Maschinenträger 114 werden zumindest die Hauptlagereinheit 108 und der Generator 112 über einen Turm 116 gegenüber einem nicht dargestellten Boden abgestützt. Die Hauptlagereinheit 108 umfasst eine Hauptwelle 118, die über eine angestellte Kegelrollenlagerung gegenüber einem Lagergehäuse 120 der Hauptlagereinheit 108 drehbar um eine Drehachse A_{D} gelagert ist. An einem Ende der Hauptwelle 118 ist der Rotorflansch 104 und an diesem der Rotor 106 gehalten. Das andere Ende der Hauptwelle 118 ist vorliegend starr mit dem Getriebe 10 antriebsmäßig verbunden, um ein von dem Rotor 106 aufgebrachtes Antriebsmoment in das Getriebe 10 einzuleiten. Das Getriebe 10 ist als Planetengetriebe mit einer oder mehreren Planetenstufen ausgeführt. Das Getriebe 10 ist über eine Generatorwelle 124 antriebsmäßig mit dem Generator 112 verbunden. Über einen Flansch 126 ist das Lagergehäuse 120 mit dem Getriebe 10 verbunden. Ein Reaktionsmoment des Getriebes 10 ist über den Flansch 126 gegenüber dem Maschinenträger 114 abgestützt.

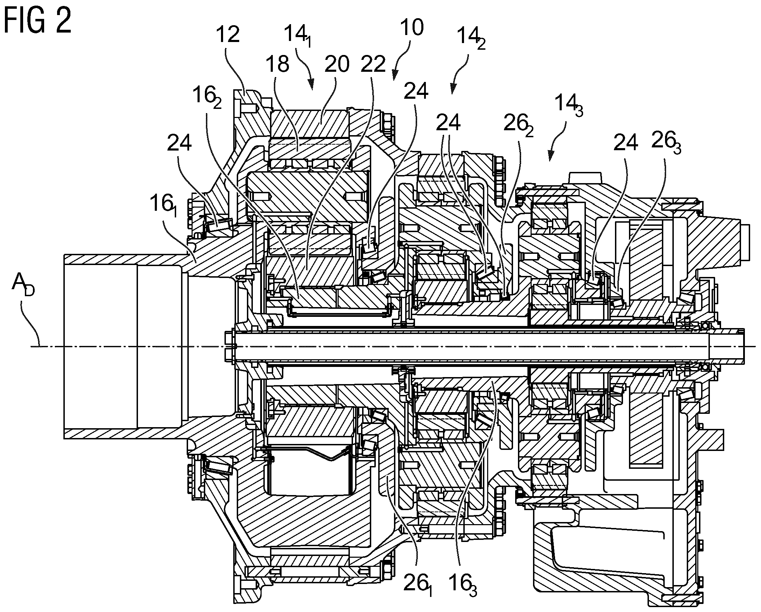

Die Figur 2 zeigt ein als Planetengetriebe 10 ausgeführtes Getriebe, wie es beispielsweise in einer in Figur 1 dargestellten Windkraftanlage 100 verbaut sein kann. Das Planetengetriebe 10 umfasst drei seriell angeordnete Planetenstufen 14₁ bis 14₃, die um eine Drehachse A_{D} umlaufend in einem Getriebegehäuse 12 angeordnet sind. Jede Planetenstufe 14₁ bis 14₃ ist abgesehen von ihrer Dimensionierung entsprechend aufgebaut und weist einen Planetenträger 16, ein Hohlrad 20, ein Sonnenrad 22 und mehrere mit dem Planetenträger 16 umlaufend und wechselseitig mit dem Hohlrad 20 und dem Sonnenrad 22 in einem schrägverzahnten Verzahnungseingriff stehende Planetenräder 18 auf. Ein Merkmal des Aufbaus des Planetengetriebes 10 besteht darin, dass jedes der Sonnenräder 22 mit dem Planetenträger 16 der nachfolgenden Planetenstufe 14 drehfest und axial verschiebefest verbunden ist. Ein weiteres Merkmal des Aufbaus besteht darin, dass die Planetenträger 16₂ und 16₃ der zweiten und der dritten Planetenstufe 14₂ und 14₃ jeweils über Lager 24 an gehäuseseitigen Abstützflanschen 26 gelagert sind. Es sind drei Abstützflansche 26₁ bis 26₃ vorgesehen, von denen die ersten beiden jeweils zwischen den Planetenstufen 14₁ bis 14₃ und einer ausgangsseitig der dritten Planetenstufe 14₃ angeordnet ist. Über den ersten Abstützflansch 26₁ und das Lager 24 wird die Axialkraft der zweiten Planetenstufe 14₂ und über den zweiten Abstützflansch 26₂ und das radial innere Lager 24 wird die Axialkraft der dritten Planetenstufe 14₃ im Reversierbetrieb abgestützt. Über den zweiten Abstützflansch 26₂ und das radial äußere Lager 24 wird die Axialkraft der zweiten Planetenstufe 14₂ und über den dritten Abstützflansch 26₃ und das Lager 24 wird die Axialkraft der dritten Planetenstufe 14₃ im Nennbetrieb abgestützt.

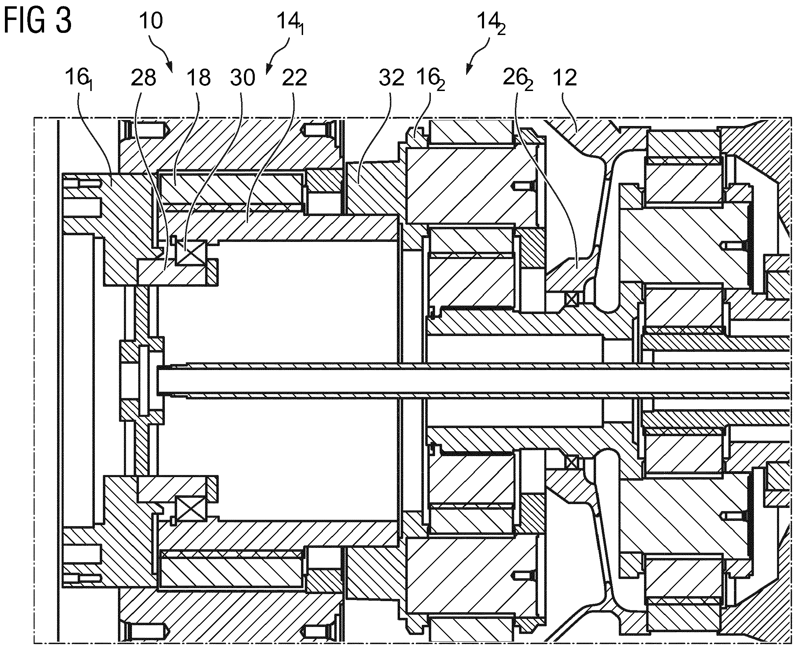

Die Figur 3 zeigt einen Ausschnitt eines Planetengetriebes 10 in einer möglichen Ausführung mit einer drehend-in-drehend Lagerung des Sonnenrades 22 gegenüber dem Planetenträger 16₁ in der ersten Planetenstufe 14₁. Das Sonnenrad 22 ist über ein Wälzlager 30 auf einem axial gerichteten Lagerflansch 28 des Planetenträgers 16₁ drehbar und axial tragend gelagert. Zu erkennen ist, dass der Lagerflansch 28 als separates ringförmiges Bauteil und auf geeignete Weise mit dem Planetenträger 16₁ verbunden ist, beispielsweise über mehrere umfänglich verteilte und axial verlaufende Verschraubungen. Alternativ kann der Lagerflansch 28 auch einstückig mit dem Planetenträger 16₁ ausgeführt sein, was vorliegend nicht dargestellt ist.

Der Planetenträger 16₂ der zweite Planetenstufe 14₂ ist ebenfalls über das Wälzlager 30 gegenüber dem Planetenträger 16₁ der ersten Planetenstufe 14₁ drehbar und tragend gelagert und zwar vorliegend mittelbar über das Sonnenrad 22 der ersten Planetenstufe 14₁. Hierzu weist das Sonnenrad 22 der ersten Planetenstufe 14₁ eine axiale Breite auf, die über den mit dem Planetenrad 18 gemeinsamen Verzahnungsbereich hinausgeht, so dass aufgrund dessen das Sonnenrad 22 auch als Sonnenwelle bezeichnet werden kann. Das Sonnenrad 22 der ersten Planetenstufe 14₁ ist über eine Verzahnungspaarung innenumfänglich an einer Nabe 32 des zweiten Planetenträgers 16₂ drehfest gehalten ist. Das Sonnenrad 22 der ersten Planetenstufe 14₁ kann in geeigneter Weise in axialer Richtung gegenüber der Nabe 32 festgelegt sein, beispielsweise über eine Verschraubung, welche vorliegend nicht dargestellt ist.

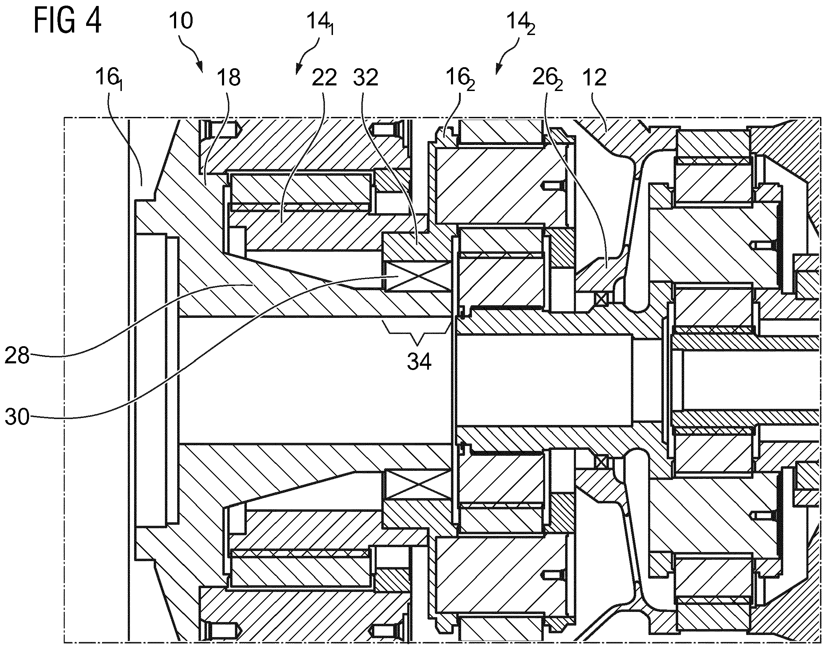

Die Figur 4 zeigt einen Ausschnitt eines Planetengetriebes 10 in einer weiteren möglichen Ausführung mit einer drehend-in-drehend Lagerung des Sonnenrades 22 gegenüber dem Planetenträger 16₁ in der ersten Planetenstufe 14₁. Die Anordnung des Wälzlagers 30 ist derart getroffen, dass es in einem durch eine in axialer Richtung überlappende Anordnung des Lagerflansches 28 des Planetenträgers 16₁ der ersten Planetenstufe 14₁ mit der Nabe 32 des Planetenträgers 16₁ der zweiten Planetenstufe 14₂ gebildeten Axialbereich 34 angeordnet ist. Der Lagerflansch 28 des Planetenträgers 16₁ der ersten Planetenstufe 14₁ hat hierzu eine Verlängerung in axialer Richtung erfahren. Die Nabe 32 des Planetenträgers 16₂ der zweiten Planetenstufe 14₂ ragt in entgegengesetzt axialer Richtung in die ersten Planetenstufe 14₁ und bildet mit dem verlängerten Lagerflansch 28 den überlappenden Axialbereich 34.

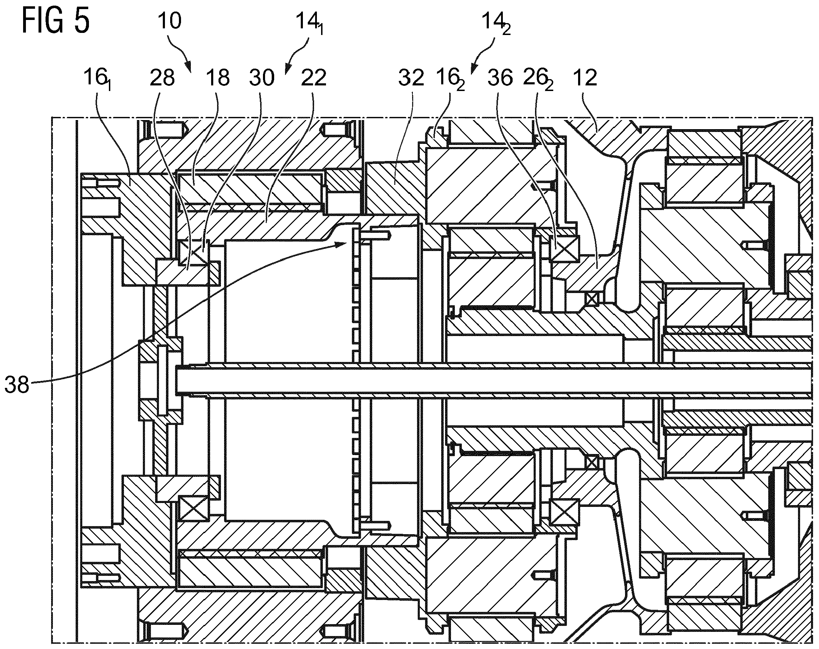

Die Figur 5 zeigt einen Ausschnitt eines Planetengetriebes 10 in einer weiteren möglichen Ausführung mit einer drehend-in-drehend Lagerung des Sonnenrades 22 gegenüber dem Planetenträger 16₁ in der ersten Planetenstufe 14₁. Es ist eine zweite Wälzlagerung 36 vorgesehen ist, über die der zweite Planetenträger 16₁ auf der von der ersten Planetenstufe 14₁ abgewandten Seite gegenüber dem Getriebegehäuse 12 drehbar gelagert ist. Mit dem Bezugszeichen 38 ist eine Welle-Nabe-Verbindung bezeichnet, wobei diese ein innerhalb des Sonnenrades 22 einsitzendes Spreizelement umfasst, zur Beaufschlagung des Sonnenrads 22 nach radial außen gegen den zweiten Planetenträger 16₂. Das Spreizelement kann mehrteilig aufgebaut sein und einen Ringkern und einen zwischen dem Ringkern und dem Sonnenrad 22 einsitzendes und in axialer Richtung beaufschlagten Keilring aufweisen.

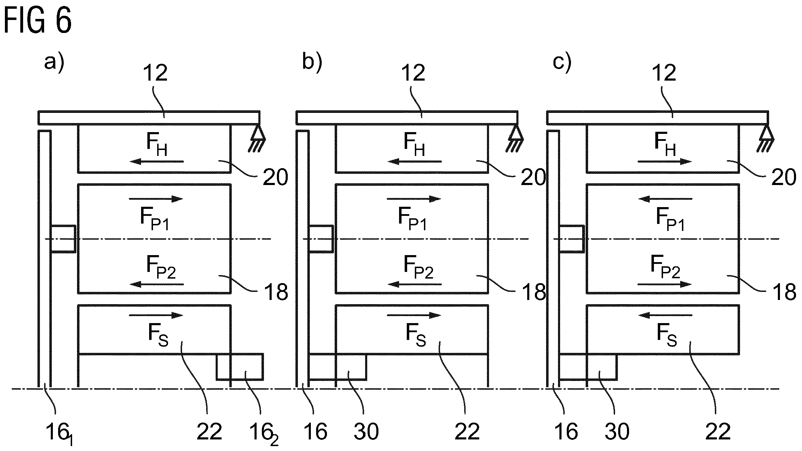

Anhand der Figur 6 und ihren Darstellungen a), b) und c) werden anhand der ersten Planetenstufe 14₁ erläutert, wie die über die Schrägverzahnung erzeugte Axialkraft F wirkt. Zunächst sind in Darstellung a) die Verhältnisse gezeigt, die der zu Figur 2 beschriebenen Ausführung des Planetengetriebes 10 entspricht. Infolge der Schrägverzahnung entstehen an den Planetenrädern 18 und dem Planetenträger 16₁ die Axialkräfte F_{P1} und F_{P2}, die entgegengesetzt wirken, so dass F_{P1} - F_{P2} = 0 gilt. Der Planetenträger 16₁ ist folglich kräftefrei. Die an dem Hohlrad 20 entstehende Axialkraft F_{H} wird von dem Gehäuse 12 aufgenommen und abgestützt. Die an dem Sonnenrad 22 entstehende Axialkraft Fs wirkt der Axialkraft F_{H} bezüglich der Richtung entgegen und wird von dem Planetenträger 16₂ aufgenommen und, wie oben beschrieben, von einem Abstützflansch 26 mit Lagerung 24 abgestützt. Abstützflansch und Lagerung sind vorliegend der Übersicht halber nicht dargestellt. Dadurch, dass die an dem Sonnenrad 22 entstehende Axialkraft F_{S} über die zweite Planetenstufe 14₂ und den Abstützflansch 26 in das Gehäuse 12 abgeleitet wird, entstehen die auch bereits weiter oben beschriebenen Erfordernisse an Bauraum und Bauteilfestigkeit.

Die in den Darstellungen b) und c) der Figur 6 gezeigten Verhältnisse entsprechen den zu den Figuren 3 und 4 beschriebenen Ausführung des Planetengetriebes 10, mit dem entscheidenden Unterschied, dass zwischen den Darstellungen b) und c) der Figur 6 die Schrägungsrichtung der Schrägverzahnungen in der Planetenstufe 16 umgedreht wird. Die Darstellung b) geht von einer als herkömmlich zu bezeichnenden rechtssteigende oder linkssteigende Schrägungsrichtung aus und die Darstellung c) geht von einer umgedrehten linkssteigenden oder rechtssteigenden Schrägungsrichtung aus. Infolge der umgedrehten Schrägungsrichtung sind die einzelnen Axialkräfte, die auf dem jeweiligen Verzahnungselement wirksam werden, zwischen der Darstellung b) und c) jeweils entgegengesetzt. Weiterhin wird infolge der drehend-in-drehend Lagerung des Sonnenrades 22 an dem Planetenträger 16 die auf dem Sonnenrad 22 entstehende Axialkraft F_{S} über das Wälzlager 30 in den Planetenträger 16 eingeleitet. Da die Axialkraft F_{P2} des Planetenrades 18 ebenfalls in den Planetenträger 16 eingeleitet wird, gilt F_{S} - F_{P2} = 0, so dass dieses Teilsystem kraftfrei ist. Weiterhin wird die Axialkraft F_{H} des Hohlrades 20 von dem Gehäuse 12 aufgenommen und abgestützt. Folglich ist der Planetenträger 16 durch die Axialkraft F_{P1} des Planetenrades 18 nicht kraftfrei und die Axialkraft F_{P1} wird über die Hauptlagereinheit 108 abgestützt, wie oben bereits beschrieben wurde. Der Unterschied zwischen den Verhältnissen der beiden Darstellungen b) und c) besteht darin, dass die Hauptlagereinheit 108 in jeweils entgegengesetzten Richtungen mit der Axialkraft F_{P1} beaufschlagt wird. Bei den Verhältnissen der Darstellung c) wirkt die Axialkraft F_{P1} den auf die Hauptlagereinheit 108 wirkenden Windkräften des Rotor 106 entgegen, so dass die Axialkraft F_{P1} die Hauptlagereinheit entlastet.

### Bezugszeichenliste

- 10: Planetengetriebe
- 12: Getriebegehäuse
- 14: Planetenstufe
- 16: Planetenträger
- 18: Planetenräder
- 20: Hohlrad
- 22: Sonnenrad
- 24: Wälzlagerung
- 26: Abstützflansch
- 28: Lagerflansch
- 30: Wälzlager
- 32: Nabe
- 34: Axialbereich
- 36: Wälzlagerung
- 38: Welle-Nabe-Verbindung
- 100: Windkraftanlage
- 102: Antriebstrang
- 104: Rotorflansch
- 106: Mehrblattrotor
- 108: Hauptlagereinheit
- 112: Generator
- 114: Maschinenträger
- 116: Turm
- 118: Hauptwelle
- 120: Lagergehäuse
- 124: Generatorwelle
- 126: Flansch

## Patentansprüche

1. Planetengetriebe (10) für eine über einen Rotor (106) angetriebene Windkraftanlage (100) mit zumindest einer in einem Getriebegehäuse (12) um eine Drehachse A_{D} umlaufenden Planetenstufe (14), wobei die zumindest eine Planetenstufe (14) einen Planetenträger (16) und ein Hohlrad (20) aufweist und der Planetenträger (16) zumindest mittelbar mit dem Rotor (72) antriebsverbunden ist und wobei der Planetenträger (16) mehrere mit dem Planetenträger (16) umlaufend und wechselseitig mit dem Hohlrad (20) und einem Sonnenrad (22) in einem Verzahnungseingriff stehende Planetenräder (18) aufweist,
**dadurch gekennzeichnet, dass**
das Sonnenrad (22) gegenüber dem Planetenträger (16) der zumindest einen Planetenstufe (14) drehbar um die Drehachse A_{D} und axial tragend gelagert ist.

2. Planetengetriebe (10) nach Anspruch 1, **dadurch gekennzeichnet, dass** das Sonnenrad (22) über eine Lagerung (26) gegenüber dem Planetenträger (16) drehbar gelagert und axial tragend gehalten ist.

3. Planetengetriebe (10) nach Anspruch 2, **dadurch gekennzeichnet, dass** die Lagerung (26) innerhalb des Sonnenrades (22) angeordnet ist.

4. Planetengetriebe (10) nach einem der Ansprüche 1 bis 3, **dadurch gekennzeichnet, dass** es sich um einen schrägverzahnten Verzahnungseingriff handelt, wobei die Verzahnung eine rechtssteigende oder linkssteigende Schrägungsrichtung aufweist.

5. Planetengetriebe (10) nach einem der Ansprüche 1 bis 4, **dadurch gekennzeichnet, dass** das Sonnenrad (22) zumindest mittelbar auf einem axial gerichteten Lagerflansch (28) des Planetenträgers (16) gelagert ist.

6. Planetengetriebe (10) nach Anspruch 5, **dadurch gekennzeichnet, dass** der Lagerflansch (28) einstückig mit dem Planetenträger (16) ausgeführt ist oder als ringförmiges Bauteil mit dem Planetenträger (16) verbunden eine funktionelle Einheit bildet.

7. Planetengetriebe (10) nach einem der Ansprüche 1 bis 6, **dadurch gekennzeichnet, dass** zumindest eine zweite Planetenstufe (14₂) mit einem Planetenträger (16₂) vorgesehen ist, wobei der Planetenträger (16₂) der zweiten Planetenstufe (14₂) über das Wälzlager (30) gegenüber dem Planetenträger (16₁) der ersten Planetenstufe (14₁) drehbar gelagert ist.

8. Planetengetriebe (10) nach Anspruch 7, **dadurch gekennzeichnet, dass** der Planetenträger (16₂) der zweiten Planetenstufe (14₂) drehfest und axial tragend mit dem Sonnenrad (22) der ersten Planetenstufe (14₁) verbunden ist.

9. Planetengetriebe (10) nach einem der Ansprüche 7 bis 8, **dadurch gekennzeichnet, dass** die Wälzlagerung (30) in einem durch eine in axialer Richtung überlappende Anordnung des Lagerflansches (28) des ersten Planetenträgers (16₁) mit einer Nabe (32) des zweiten Planetenträgers (16₂) gebildeten Axialbereich (34) angeordnet ist.

10. Planetengetriebe (10) nach Anspruch 9, **dadurch gekennzeichnet, dass** das Sonnenrad (22) der ersten Planetenstufe (16₁) über eine Verzahnungspaarung umfänglich auf der Nabe (32) des zweiten Planetenträgers (16₂) drehfest gehalten ist.

11. Planetengetriebe (10) nach Anspruch 10, **dadurch gekennzeichnet, dass** das Sonnenrad (22) gegenüber dem zweiten Planetenträger (16₂) in axialer Richtung verschraubt ist.

12. Planetengetriebe (10) nach einem der Ansprüche 7 bis 10, **dadurch gekennzeichnet, dass** eine zweite Lagerung (36) vorgesehen ist, über die der zweite Planetenträger (16₂) auf der von der ersten Planetenstufe (16₁) abgewandten Seite gegenüber dem Getriebegehäuse (12) drehbar gelagert ist.

13. Planetengetriebe (10) nach einem der Ansprüche 7 bis 10, **dadurch gekennzeichnet, dass** der zweite Planetenträger (16₂) einwangig ausgeführt ist.

14. Antriebsstrang (102) für eine Windkraftanlage (100) zur drehmomentübertragenden Verbindung eines Rotors (106) mit einem Generator (112), umfassend eine Hauptlagereinheit (108) mit einem Lagergehäuse (120) und einer Hauptwelle (118) und ein über die Hauptwelle (118) angetriebenes Getriebe (10), wobei das Getriebe (10) den Generator (112) zumindest mittelbar antreibt, **dadurch gekennzeichnet, dass** das Getriebe (10) als Planetengetriebe nach einem der vorangegangenen Ansprüche ausgebildet ist.

15. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach Anspruch 14 ausgebildet ist.
